# FASCICULE DE BREVET EUROPEEN

(11) **EP 1 179 827 B1**
(45) Date de publication et mention de la délivrance du brevet: **20.01.2010**
(21) Numéro de dépôt: 01410095.2
(22) Date de dépôt: 26.07.2001
(51) Int. Cl.: H01H 9/16, G01R 31/327

(54) **Appareil électrique comportant un dispositif de controle, support et dispositif de surveillance pour un tel appareil, et installation électrique les comportant**
Elektrisches Gerät mit Kontrollvorrichtung, Stütz- und Überwachungseinrichtung für ein solches Gerät, und elektrische Installation, die sie enthält
Electrical apparatus comprising a controlling device, a support and surveillance device for such an apparatus, and their electric installation

(30) Priorité: 08.08.2000 FR 0010417
(43) Date de publication de la demande: 13.02.2002
(60) Demande divisionnaire: 09354011.0
(73) Titulaire: Schneider Electric Industries SAS, 92500 Rueil-Malmaison (FR)
(72) Inventeur: Clement, Philippe, 38050 Grenoble Cedex 09 (FR); Leonard, Didier, 38050 Grenoble Cedex 09 (FR); Vernay, Marc, 38050 Grenoble Cedex 09 (FR); Perron, Patrick, 38050 Grenoble Cedex 09 (FR)
(74) Mandataire: Tripodi, Paul

(56) Documents cités:
- DE-A- 4 112 625
- US-A- 5 905 442
- US-A- 6 025 783

## Description

L'invention concerne un appareil électrique comportant des composants électriques et un dispositif de contrôle d'au moins un desdits composants électriques, un support et un dispositif de surveillance pour un tel appareil, ainsi qu'une installation électrique comportant un tel appareil électrique, un tel support ou un tel dispositif de surveillance.

Les appareils électriques de l'état de la technique tels que des interrupteurs ou des disjoncteurs comportent des circuits auxiliaires pour reporter des états desdits appareils. Généralement, ces circuits auxiliaires sont accouplés sur les cotés des appareils ou disposés dans lesdits appareils. De manière connue, ces circuits sont des contacts utilisés pour signaler dans une installation électrique localement ou à distance les états desdits appareils.

L'installation d'appareils électriques associés à des circuits auxiliaires nécessite un câblage important comportant un grand nombre de fils de liaison. De plus, lorsque les appareils électriques sont modulaires pour être installés dans un tableau ou un coffret munis de support en forme de rails, les circuits auxiliaires occupent un nombre important de modules. Puisque les circuits auxiliaires sont généralement utilisés pour effectuer une signalisation, il est nécessaire que ces circuits soient parfaitement isolés électriquement des circuits principaux des appareils électriques. Ainsi, les circuits auxiliaires comportent des bornes de raccordement de taille importante isolées des circuits des appareils auxquels ils sont associés.

L'invention a pour but un appareil électrique comportant un dispositif de contrôle évitant l'utilisation de circuits auxiliaires solidaires dudit appareil et garantissant un isolement électrique, un support et un dispositif de surveillance pour un tel appareil, ainsi qu'une installation électrique comportant ledit appareil, ledit support, et/ou ledit dispositif.

Un système selon l'invention est décrit dans la revendication 1.

Dans un mode de réalisation préférentiel, le dispositif de contrôle comporte des moyens de variation de charge connectés aux moyens de réception électromagnétique pour renvoyer un signal de contrôle en modifiant le rayonnement électromagnétique lorsqu'un rayonnement électromagnétique est reçu.

Dans un mode de réalisation particulier, le dispositif de contrôle comporte au moins un dispositif de visualisation destiné à être alimenté par les moyens de réception électromagnétique pour visualiser l'état d'au moins un capteur lorsqu'un rayonnement électromagnétique est reçu par lesdits moyens de réception électromagnétique.

Avantageusement, les moyens de réception électromagnétique comportent au moins une bobine d'induction électromagnétique.

Selon une variante, les moyens de réception électromagnétique comportent au moins une antenne.

De préférence, les moyens de réception électromagnétique comportent un circuit accordé à une fréquence sensiblement égale à une fréquence du rayonnement électromagnétique.

Avantageusement, les moyens de réception électromagnétique sont disposés dans au moins une paroi latérale de l'appareil électrique.

Dans un mode de réalisation particulier, l'appareil comporte un interrupteur électrique et un capteur fournissant au dispositif de contrôle un signal représentatif de l'état dudit interrupteur.

Dans un mode de réalisation particulier, l'appareil comporte un disjoncteur électrique et un capteur fournissant au dispositif de contrôle un signal représentatif de l'état dudit disjoncteur.

Dans un mode de réalisation particulier, l'appareil comporte un dispositif de détection de présence de tension électrique fournissant un signal représentatif d'une présence tension au dispositif de contrôle.

Selon un développement d'un mode réalisation de l'invention, le dispositif de contrôle comporte un circuit d'entrée connecté aux moyens de réception électromagnétique et un circuit de codage connecté audit circuit d'entrée.

Avantageusement, le circuit d'entrée comporte des moyens pour fournir une alimentation électrique lorsqu'un rayonnement électromagnétique est reçu.

Avantageusement, le circuit d'entrée comporte des moyens pour fournir un signal représentatif d'un signal d'horloge lorsqu'un rayonnement électromagnétique est reçu.

De préférence, le circuit d'entrée comporte des moyens pour faire varier une impédance de charge des moyens de réception électromagnétique, la variation de l'impédance de charge permettant de modifier un rayonnement électromagnétique reçu par les dits moyens de réception et de renvoyer un signal vers des moyens d'émission dudit rayonnement électromagnétique.

De préférence, le circuit de codage comporte au moins une entrée pour recevoir un signal représentatif d'un signal de contrôle et au moins une sortie pour fournir un signal représentatif d'une commande.

Avantageusement, le dispositif de contrôle comporte des moyens d'identification pour fournir au circuit de codage un signal de contrôle représentatif de paramètres d'identification ou de réglage de l'appareil électrique.

Avantageusement, les moyens d'identification comportent des moyens de mémorisation pour mémoriser un numéro d'identification unique pour chaque appareil.

Avantageusement, le dispositif de contrôle comporte des moyens de détermination de l'état d'au moins un capteur de l'appareil électrique pour fournir au circuit de codage un signal de contrôle représentatif de l'état dudit au moins un capteur.

Avantageusement, le dispositif de contrôle comporte des moyens de mesure d'au moins une grandeur électrique pour fournir au circuit de codage un signal de contrôle représentatif de la dite au moins une grandeur électrique.

Avantageusement, le dispositif de contrôle comporte des moyens de mesure d'au moins une grandeur magnétique pour fournir au circuit de codage un signal de contrôle représentatif de la dite au moins une grandeur magnétique.

Avantageusement, le dispositif de contrôle comporte des moyens de mesure d'au moins une grandeur thermique pour fournir au circuit de codage un signal de contrôle représentatif de la dite au moins une grandeur thermique.

Avantageusement, le dispositif de contrôle comporte des moyens de visualisation recevant du circuit de codage un signal représentatif d'une commande de visualisation.

Avantageusement, le dispositif de contrôle comporte des moyens d'actionnement recevant du circuit de codage un signal représentatif d'une commande de l'appareil électrique.

Avantageusement, le dispositif de contrôle comporte des moyens de communication pour envoyer ou recevoir des signaux du circuit de codage.

Avantageusement, le dispositif de contrôle comporte des moyens d'émission électromagnétiques disposés dans l'appareil pour envoyer des signaux du circuit de codage.

De préférence, le circuit de codage comporte des moyens de traitement anticollision pour gérer l'émission et/ou la réception de trames de communication.

Avantageusement, le circuit de codage comporte des moyens pour transmettre un nombre prédéterminé de trames de communication identiques.

De préférence, le dispositif de contrôle comporte des moyens d'initialisation connectés au circuit d'entrée et au circuit de codage.

L'appareil est de préférence disposé dans un boîtier d'appareillage électrique modulaire.

Dans un autre mode réalisation, l'appareil électrique est constitué par un disjoncteur comportant un déclencheur électronique associé à des moyens de communication comportant lesdits moyens de réception électromagnétique et des moyens d'émission électromagnétique, lesdits moyens de réception et d'émission électromagnétique ayant un couplage magnétique.

Le couplage magnétique est de préférence réalisé par un premier circuit magnétique passant dans une bobine de réception et par un second circuit magnétique passant par une bobine d'émission électromagnétique, le premier et le second circuits magnétiques permettant le passage d'un flux magnétique à travers une paroi de l'appareil.

Dans un mode de réalisation préférentiel, le dispositif comporte des moyens pour générer un signal haute fréquence connectés aux moyens d'émission électromagnétique.

Dans un mode de réalisation particulier, le dispositif comporte un circuit de traitement comportant des moyens de modulation, de démodulation, de codage et/ou de décodage d'un signal représentatif d'un rayonnement électromagnétique susceptible d'être émis par les moyens d'émission électromagnétique.

Avantageusement, le circuit de traitement comporte des moyens de détection de la variation du rayonnement électromagnétique émis par les moyens d'émission électromagnétique et susceptible d'être modifiés par un dispositif de contrôle d'au moins un appareil.

De préférence, le dispositif comporte des moyens de visualisation connectés au circuit de traitement.

Avantageusement, le dispositif comporte des moyens pour communiquer avec un centralisateur distant.

Avantageusement, le dispositif comporte un centralisateur connecté au circuit de traitement.

Avantageusement, le centralisateur comporte des moyens de contrôle d'installation électrique destinés à recevoir au moins un numéro d'identification d'au moins un appareil pour contrôler la visualisation de caractéristiques dudit au moins un appareil.

De préférence, le dispositif comporte un coffret ayant au moins une paroi latérale comportant les moyens d'émission électromagnétique.

De préférence, les moyens d'émission électromagnétique comportent au moins deux bobines d'induction électromagnétique sur deux parois disposées sur des cotés opposés d'un coffret par rapport à la disposition d'au moins un appareil électrique susceptible d'être disposé dans ledit coffret.

Dans un mode de réalisation particulier, les moyens d'émission électromagnétique comportent au moins deux bobines d'induction électromagnétique reliées en série et connectées aux moyens pour générer un signal haute fréquence.

Dans un autre mode de réalisation particulier, les moyens d'émission électromagnétique comportent au moins deux bobines d'induction électromagnétique connectées individuellement à des moyens pour générer un signal haute fréquence.

Dans un mode de réalisation préférentiel, le dispositif comporte au moins un support en forme de rail tel que défini ci-dessus comportant des moyens d'émission électromagnétique.

Dans un mode de réalisation préférentiel, le dispositifs comporte au moins un appareil électrique tel que défini ci-dessus comportant des moyens de réception électromagnétique.
- la figure 1 représente un schéma d'appareils électriques et d'installation de l'art antérieur ;
- la figure 2 représente un schéma d'un appareil électrique, d'un dispositif de surveillance et d'une installation selon un premier mode de réalisation de l'invention ;
- la figure 3 représente un schéma d'un appareil électrique selon un second mode réalisation de l'invention ;
- la figure 4 représente un schéma d'un appareil électrique selon un troisième mode réalisation de l'invention ;
- la figure 5 représente un schéma d'un dispositif de contrôle d'un appareil électrique selon un quatrième mode réalisation de l'invention ;
- la figure 6 représente un schéma d'un dispositif de contrôle d'un appareil électrique selon un cinquième mode réalisation de l'invention ;
- la figure 7 représente un schéma d'un dispositif de contrôle d'un appareil électrique selon un sixième mode réalisation de l'invention ;
- la figure 8 représente un schéma d'un dispositif de contrôle d'un appareil électrique selon un premier développement du mode de réalisation de la figure 7 ;
- la figure 9 représente un schéma d'un second développement des modes de réalisation des figures 7 et 8 ;
- la figure 10 représente une vue d'un dispositif de surveillance et d'une installation électrique selon une première variante d'un mode réalisation de l'invention ;
- la figure 11 représente une vue d'un dispositif de surveillance et d'une installation électrique selon une seconde variante d'un mode réalisation de l'invention ;
- la figure 12 représente une vue d'appareils électriques, d'un support, d'un dispositif de surveillance et d'une installation électrique selon une troisième variante d'un mode réalisation de l'invention ;
- la figure 13 représente une vue de coté d'un appareil, et d'un support selon le mode de réalisation de la figure 12 ;
- les figures 14 et 15 représentent des vues de variantes des dispositifs de surveillance et d'installations comportant des appareils et des supports selon des modes de réalisation des figures 12 et 13 ; et
- la figure 16 représente un appareil électrique tel qu'un disjoncteur selon un mode de réalisation de l'invention.

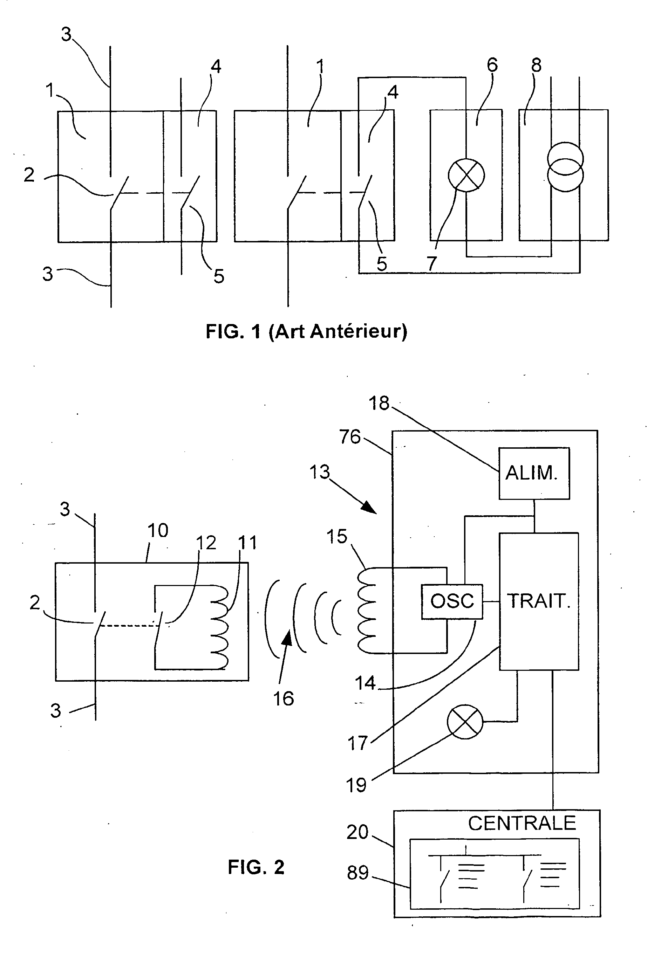

Le schéma de la figure 1 montre un premier appareil électrique 1 comportant un interrupteur 2 connecté à des conducteurs électriques principaux 3. Un circuit auxiliaire 4 associé à l'appareil 1 comporte un contact électrique 5 couplé mécaniquement au contact 2 pour fournir un signal représentatif de l'état de l'interrupteur de l'appareil. Ainsi, le circuit auxiliaire 4 peut être considéré comme un dispositif de contrôle de l'appareillage 1. Sur cette même figure, un second appareil 1 sur lequel est associé un circuit auxiliaire 5 est connecté à un dispositif de surveillance comportant un bloc modulaire 6 muni d'un voyant 7 et une alimentation électrique 8. Le contact 5 du circuit auxiliaire 4, le voyant 7 et des sorties de l'alimentation 8 sont connectés en série pour visualiser sur le voyant 7 l'état de l'appareil électrique. Dans ce cas, l'état de l'appareil électrique correspond à l'état ouvert ou fermé de l'interrupteur 2.

Une installation comportant plusieurs appareils à circuit auxiliaire de l'état de l'art nécessite une quantité importante de câblage et de place.

Dans un appareil selon un mode réalisation de l'invention un dispositif de contrôle comporte des moyens de réception électromagnétique connectés à au moins un capteur. Les moyens de réception électromagnétiques sont destinés notamment à recevoir un rayonnement électromagnétique depuis des moyens d'émission électromagnétique pour recevoir de l'énergie électrique et/ou pour recevoir ou renvoyer un signal représentatif de l'état d'au moins un élément de l'appareil détecté par le capteur.

Sur la figure 2, un appareil électrique 10 selon un mode de réalisation de l'invention comporte une bobine de réception électromagnétique 11 connectée à un capteur 12. Le capteur 12 représenté par un contact détecte la position de l'interrupteur 1 et ferme le circuit de la bobine 11 lorsque l'interrupteur 2 est fermé. En fermant le circuit, le capteur modifie le rayonnement électromagnétique reçu par la bobine 11 pour renvoyer un signal de contrôle lorsque ledit rayonnement électromagnétique est reçu. Le dispositif de contrôle fonctionne alors comme un transpondeur.

Un dispositif de surveillance 13 comporte un circuit oscillateur 14 connecté à une bobine 15 d'émission électromagnétique. Le circuit oscillateur 14 fournit à la bobine 15 un signal haute fréquence pour générer le rayonnement électromagnétique 16 et permet de détecter des variations dudit rayonnement électromagnétique absorbé par au moins une bobine de réception 11. Le rayonnement électromagnétique 16 est destiné à être émis par la bobine 15 vers au moins un appareil 10 comportant une bobine 11. Sur la figure 2, le dispositif de surveillance 13 comporte un circuit de traitement 17 connecté à l'oscillateur 14 pour commander l'émission du rayonnement électromagnétique et pour recevoir un signal de retour représentatif des variations du rayonnement électromagnétique émis par la bobine 15 et susceptible d'être modifié par un dispositif de contrôle d'au moins un appareil. Le circuit de traitement peut commander l'émission d'un rayonnement électromagnétique en procédant aussi à un codage, à un décodage, à une modulation et/ou à une démodulation d'un signal représentatif du rayonnement électromagnétique.

Le dispositif de surveillance 13 comporte un circuit d'alimentation 18 pour alimenter en énergie électrique l'oscillateur 14 et le circuit de traitement 17. Dans ce mode de réalisation, ce circuit de traitement 17 commande un dispositif de visualisation 19 représenté par un voyant. Ce circuit comporte aussi des moyens pour communiquer avec un centralisateur 20 distant relié au dispositif de surveillance.

Le centralisateur 20 comporte de préférence des moyens de contrôle 89 d'installation électrique pour signaler des états et des caractéristiques des appareils, et/ou pour gérer de façon dynamique des schémas d'installations électriques.

L'oscillateur 14 et le circuit de traitement 17 peuvent être intégrés sur un même circuit pour faire un seul ensemble de traitement 76.

Selon la distance entre les bobines 11 et 15, la bobine 11 de réception électromagnétique peut prendre la forme d'une bobine d'inductance pour les champs magnétiques proches ou la forme d'une antenne électromagnétique en boucle pour des champs électromagnétiques éloignés.

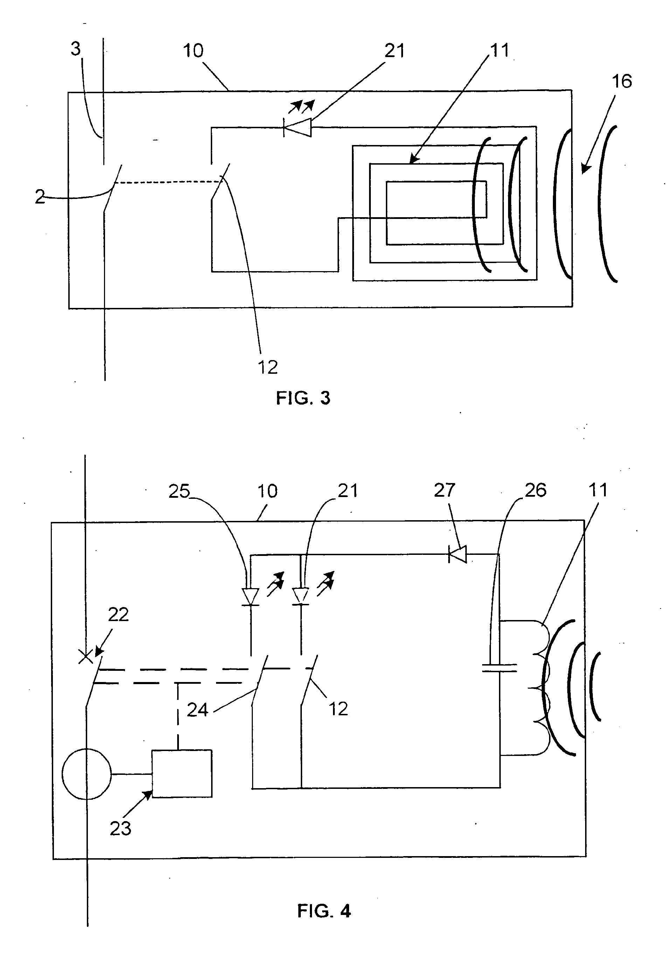

Dans le mode de réalisation de la figure 3, un appareil 10 comporte un capteur 12 connecté à la bobine 11 de réception électromagnétique, représentée par une antenne, et un voyant lumineux connecté en série entre le capteur et la bobine 11. Le voyant lumineux peut avantageusement être une diode électroluminescente faible consommation. Dans un tel appareil, la signalisation de l'état de l'appareil se fait sur l'appareil. Le rayonnement électromagnétique capté par la bobine 11 permet de fournir suffisamment d'énergie électrique pour pouvoir alimenter le voyant 21. Dans ce cas, le rayonnement électromagnétique permet d'alimenter par télé-alimentation le dispositif de contrôle de l'appareil et de reporter l'état de l'appareil vers un dispositif de surveillance. Il est également possible de n'utiliser qu'une seule de ces fonctions, l'alimentation en énergie électrique du dispositif de contrôle de l'appareil avec signalisation sur l'appareil ou le report d'état de l'appareil uniquement. Avantageusement l'alimentation par un rayonnement électromagnétique permet d'éviter des alimentations auxiliaires sur des appareils ainsi que tous les problèmes liés à ces circuits auxiliaires, notamment les problèmes de bornes de connexion, d'isolement électrique, et de place. Des bobines d'émission de rayonnement électromagnétique connectées à un circuit oscillateur alimenté par un circuit d'alimentation suffisent à émettre un rayonnement électromagnétique pour alimenter par télé-alimentation un ou plusieurs appareils. La fréquence d'émission du rayonnement électromagnétique est de préférence supérieure à 100kHz.

Sur la figure 4, un appareil 10 comporte un disjoncteur 22 dont l'ouverture est commandée par un déclencheur 23. Dans ce mode de réalisation un capteur 12 détecte l'état d'ouverture
ou de fermeture du disjoncteur et un capteur 24 détecte l'état d'ouverture par déclenchement sur une action du déclencheur 23. Le déclencheur peut agir notamment suite à un dépassement d'un seuil de courant de ligne ou de fuite. Le capteur 12 commande l'allumage du voyant 21 représentatif de l'état ouvert ou fermé du disjoncteur et le capteur 24 commande un voyant 25 disposé aussi sur l'appareil et représentatif de l'état d'ouverture sur déclenchement.

Avantageusement, l'appareil 10 de la figure 4 comporte un condensateur 26 connecté à la bobine 11 pour former un circuit résonnant de fréquence de résonance sensiblement égale à la fréquence d'un rayonnement électromagnétique à capturer. Ce circuit permet de sélectionner le rayonnement électromagnétique et d'améliorer sa réception. En sortie du circuit résonnant de réception du rayonnement électromagnétique, un redresseur 27 représenté par une diode est connecté entre la bobine 11 et les voyants 21 et 25 pour fournir une tension ou un courant redressés.

Dans ce mode de réalisation, le changement d'état d'au moins un capteur 12 ou 24 permet d'allumer au moins une diode et de faire varier le rayonnement électromagnétique pour renvoyer un signal en retour. Le signal en retour peut être utilisé si nécessaire par un circuit de traitement d'un dispositif de surveillance.

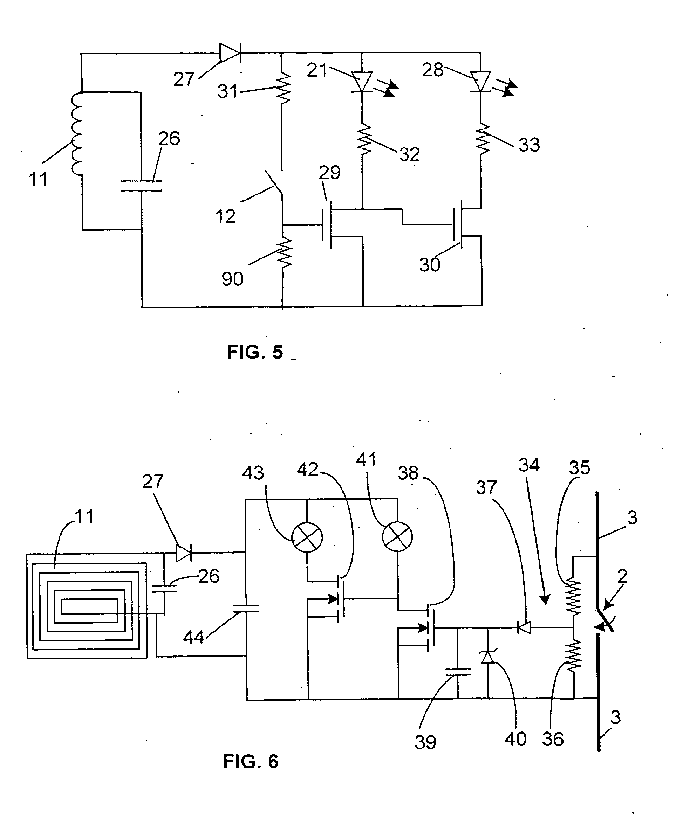

Sur la figure 5, un dispositif de contrôle d'un appareil électrique selon un mode réalisation de l'invention comporte un circuit résonant composé de la bobine 11 de réception d'un rayonnement électromagnétique et du condensateur 26. Une diode 27 redresse un signal de réception représentatif du rayonnement électromagnétique pour fournir une tension ou un courant continu à des diodes électroluminescentes 21 et 28 commandées par des transistors respectivement 29 et 30. Un capteur 12 commande la conduction du premier transistor 29 qui inverse le signal pour commander le second transistor 30. De préférence, des résistances 31, 32 et 33 de limitation et de polarisation sont connectées en série respectivement avec le capteur 12 et les diodes 21 et 28. Une résistance 90 permet de polariser au repos le transistor 29.

Ainsi, lorsque le capteur 12 est ouvert, le transistor 29 est ouvert et l'entrée du transistor 30 est polarisée à travers la diode 21 et la résistance 32. Le transistor 30 est alors passant et la diode 28 est éclairée. Lorsque le capteur 12 est fermé, le transistor 29 est passant la diode 21 est éclairée, la conduction du transistor 29 bloque la polarisation du transistor 30 qui ne conduit plus, et la diode 28 est éteinte.

Dans ce mode de réalisation, une des deux diodes 21 ou 28 est allumée tant que le rayonnement électromagnétique fournit de l'énergie à la bobine 11. L'état du capteur 12 ou de l'appareil est détecté si l'une des diodes est allumée, mais si les deux diodes 21 et 28 sont éteintes cela peut signifier qu'un rayonnement suffisant n'est pas émis ou qu'une anomalie s'est produite. Un tel dispositif permet aussi de vérifier le bon fonctionnement de l'alimentation et de la surveillance des appareils. Les diodes 21 et 28 peuvent être indépendantes ou groupées dans un même composant pouvant émettre une lumière de couleur différente selon le signal de commande. Par exemple, les diodes 21 et 28 peuvent être remplacées par une diode électroluminescente bicolore.

Pour renvoyer un signal de retour, les diodes 21 et 28 peuvent avoir une tension directe différente, ou les résistances de limitation 32 et 33 peuvent être de différentes valeurs. S'il n'y a pas d'utilisation de signal de retour, les diodes peuvent être du même type et les résistances de même valeur.

Sur la figure 6, le capteur est un détecteur de présence tension 34 connecté entre deux pôles d'un contact 2 de l'appareil. Ce détecteur comprend un diviseur de tension comportant deux résistances 35 et 36 connectées en série, un point milieu du diviseur connecté à une diode de redressement 37 pour commander un transistor 38 qui comporte sur son électrode de commande un condensateur de filtrage 39 et un écrêteur de tension 40. Le transistor 38 commande un premier voyant 41 et inverse le signal de commande pour commander un second transistor 42 qui commande un second voyant 43. Ainsi, les voyants 41 et 43 sont commandés de manière inversée en fonction de la présence ou du manque de tension.

Une bobine d'induction 11 en forme d'antenne destinée à recevoir un rayonnement électromagnétique est connectée à une diode de redressement 27 pour alimenter le dispositif de contrôle en courant redressé. Un condensateur 44 connecté en sortie de la diode 27 filtre le courant redressé par la diode pour fournir une tension continue d'alimentation à des voyants 41 et 43, et des transistors 38 et 42.

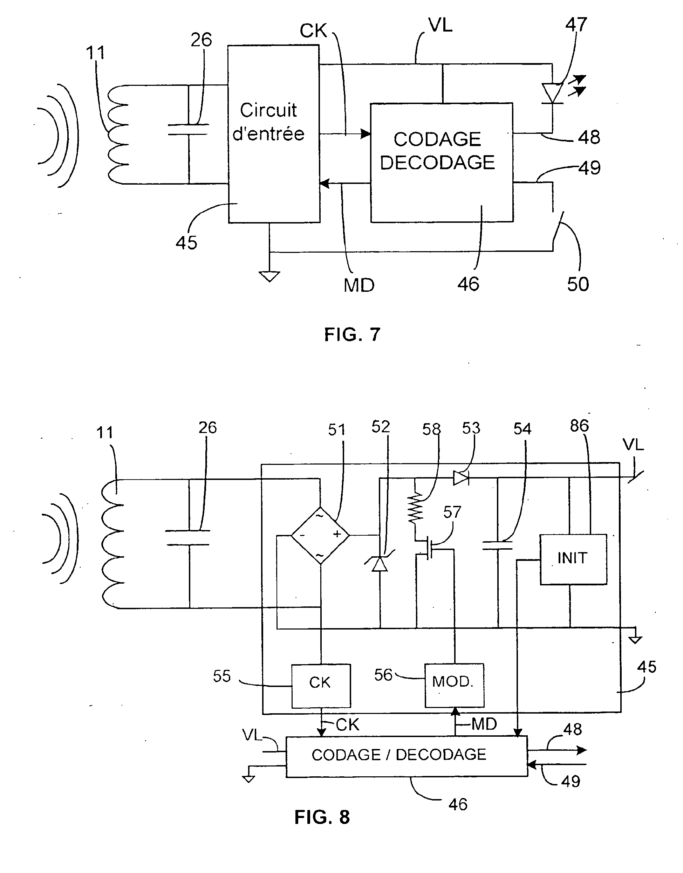

Dans le mode de réalisation de la figure 7, le dispositif de contrôle comporte un circuit d'entrée 45 connecté aux moyens de réception électromagnétique représentés par la bobine 11 et le condensateur 26, et un circuit de codage 46 connecté au circuit d'entrée. Le circuit d'entrée fournit une tension VL alimentation électrique au circuit de codage 46 et/ou à des moyens de visualisation 47 lorsqu'un rayonnement électromagnétique est reçu.

Avantageusement, le circuit d'entrée fournit au circuit de codage un signal CK représentatif d'un signal d'horloge lorsqu'un rayonnement électromagnétique est reçu. Le signal CK permet dans un mode réalisation particulier de commander le circuit de codage pour synchroniser des moyens de modulation d'un signal de retour. Le signal CK peut aussi être utilisé pour effectuer la démodulation d'un signal porté par le rayonnement électromagnétique et destiné au dispositif de contrôle de l'appareil. Le circuit de codage fournit un signal de modulation MD au circuit d'entrée pour commander une variation de charge et par conséquent renvoyer un signal de retour en fonction de fonctions définies dans le circuit de codage. La modulation du signal de retour peut être une modulation en phase, en amplitude ou en fréquence.

Dans le mode de réalisation de la figure 7, le circuit de codage comporte au moins une sortie pour fournir un signal 48 représentatif d'un signal de commande et une entrée pour recevoir un signal 49 représentatif d'un signal de contrôle. Dans ce cas, le signal 48 est fourni à une diode électroluminescente 47 et le signal 49 est fourni par un capteur 50.

Sur la figure 8, le schéma du circuit d'entrée est représenté de façon détaillée selon un mode de réalisation de l'invention. Le circuit d'entrée comporte un pont redresseur 51 connecté au circuit résonant représenté par la bobine d'induction électromagnétique 11 et le condensateur 26 pour recevoir le rayonnement électromagnétique. Un limiteur de tension 52 est connecté sur des sorties du pont redresseur pour limiter à une valeur maximum la tension d'alimentation VL. Une diode 53 anti-retour est connectée sur une sortie positive du pont 51 pour alimenter un condensateur de filtrage 54. Une tension d'alimentation VL est alors fournie en sortie du condensateur 54.

Un circuit 55 de détection de signal d'horloge est connecté sur une entrée alternative du pont et au circuit de codage pour fournir le signal CK. Le signal CK peut notamment servir à déterminer un signal de modulation, en particulier si une modulation de phase du signal de retour est choisie. Le signal de modulation MD est fourni à un circuit de modulation 56 pour mettre en forme des signaux de modulation et commander des moyens pour faire varier une impédance de charge des moyens de réception électromagnétique. Dans ce mode de réalisation, les moyens pour faire varier une impédance de charge comportent un transistor 57 en série avec une résistance 58 connectés en sortie du pont 51 avant la diode anti-retour 53. Lorsque la conduction du transistor 57 est commandée, la résistance 58 charge la sortie du pont et provoque une variation d'impédance. Cette variation de l'impédance de charge permet de modifier un rayonnement électromagnétique reçu par lesdits moyens de réception 11 et 26 et renvoie un signal vers des moyens d'émission. La diode anti-retour 53 évite la décharge du condensateur et assure une continuité de l'alimentation.

Le circuit de codage permet de traiter notamment l'envoie de trames de communication dans le signal de renvoi ou de retour vers les moyens de communication. Cependant, lorsque plusieurs appareils sont susceptibles d'envoyer des signaux de renvoie ou de retour, le circuit de codage comporte avantageusement des moyens de traitement anticollision pour gérer l'émission et la réception de trames de communication. Par exemple, le circuit de codage peut transmettre un nombre prédéterminé de trames de communication identiques. Avantageusement, au moins cinq trames identiques sont renvoyées.

Le dispositif de la figure 8, comporte aussi un circuit d'initialisation 86 pour fournir un signal d'initialisation sur une entrée du circuit de codage 46. Le signal d'initialisation peut être fourni, par exemple, à chaque montée de la tension d'alimentation VL.

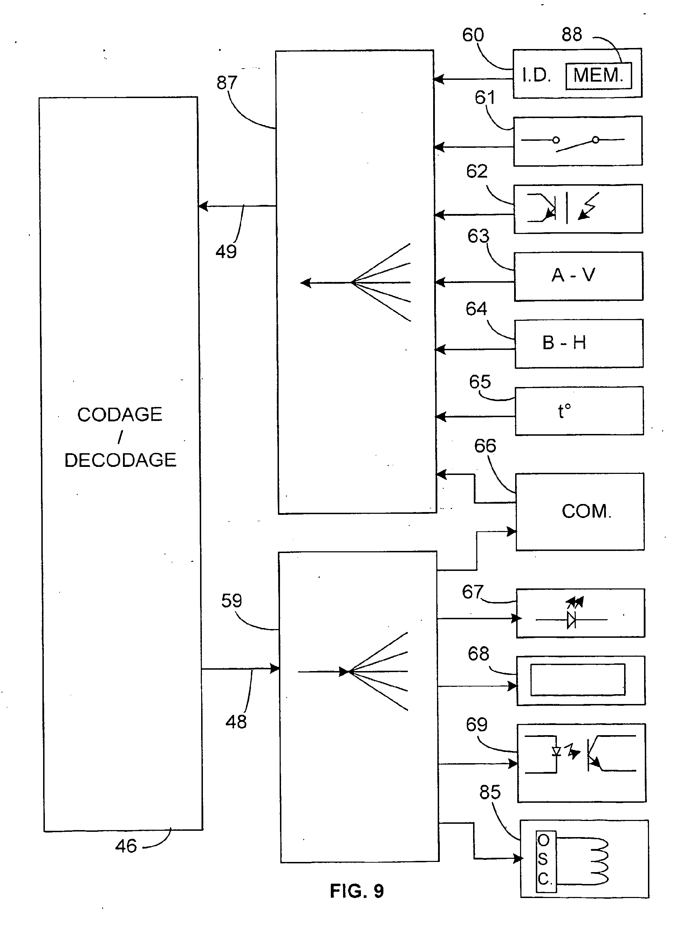

La figure 9 représente un circuit de codage 46 avec une entrée pour recevoir le signal 49 et une sortie pour fournir le signal 48, ces signaux sont représentatifs d'un ou de plusieurs signaux de contrôle ou de commande. Les signaux peuvent être fournis ou reçus directement sur l'entrée ou la sortie ou comme sur la figure 9. Ils peuvent aussi passer par des circuits de regroupement de signaux tel que des multiplexeurs, des démultiplexeurs, des registres à décalage ou de mise en série de signaux, ou des liaisons par des bus de communication série. Un circuit 87 de regroupement d'entrées est connecté au circuit de codage 46 pour regrouper des signaux d'entrée et un circuit 59 de regroupement de sorties est connecté au circuit de codage 46 pour dissocier des signaux de sortie.

Les signaux 48 et 49 d'entrée et de sortie du circuit de codage peuvent être des signaux logiques tout ou rien, des signaux à plusieurs niveaux logiques, et ou des signaux analogiques.

Ainsi sur la figure 9, un dispositif d'identification 60 permet de fournir au circuit de codage un signal de contrôle représentatif de paramètres d'identification ou de réglage de l'appareil électrique. Les paramètres d'identification peuvent être représentatifs de numéro de série, type d'appareil, de calibre, ou de taille. Les paramètres de réglage peuvent être représentatifs de seuils de courant ou de tension, de temporisation de déclenchement ou d'autres paramètres d'un appareil électrique.

Le dispositif de d'identification peut comporter une mémoire 88 pour mémoriser un numéro d'identification unique pour chaque appareil. Le numéro d'identification unique peut comporter des informations d'une étiquette définissant le type d'appareil avec ces caractéristiques et un numéro de série. Le numéro d'identification peut être utilisé dans une centrale 20 comportant des moyens de contrôle 89 d'installation électrique. Dans une telle centrale, une table définie pour une interface de visualisation comporte des fonctions de support d'étiquette pour convertir le numéro d'identification en données alphanumériques ou graphiques. Ces données sont utilisables avec des paramètres d'identification ou de réglage pour gérer de façon dynamique des schémas d'installations électriques. Par exemple, si un appareil est remplacé par un autre appareil de caractéristiques différentes, un schéma ou un tableau affiché sur la centrale est mis à jour automatiquement.

Par exemple, d'autres fonctions du numéro d'identification unique mémorisé dans la mémoire 88 peuvent être une fonction d'adressage d'un circuit de communication de l'appareil, ou une fonction pour d'identifier l'appareil dans un dispositif anti-copies par numéro de série unique.

Un dispositif 61 de détermination de l'état d'au moins un capteur de l'appareil électrique permet de fournir au circuit de codage un signal de contrôle représentatif de l'état dudit au moins un capteur. Le capteur peut détecter notamment un état d'ouverture ou de fermeture de contact, ou un état d'un mécanisme de déclenchement d'un disjoncteur. Le capteur peut notamment être un contact électrique, un capteur de position, ou un capteur optique réagissant à un changement opéré sur un faisceau lumineux par exemple l'obturation, la réflexion ou la déviation dudit faisceau. Un tel capteur est représenté par un dispositif 62.

Des dispositifs 61 et 62 peuvent aussi déterminer l'état de capteurs représentatifs de diverses causes de déclenchement d'un disjoncteur, notamment un déclenchement thermique ou long retard, un déclenchement magnétique ou court retard, ou un déclenchement différentiel ou de protection terre.

Un dispositif 63 de mesure d'au moins une grandeur électrique permet de fournir au circuit de codage un signal de contrôle représentatif de la dite au moins une grandeur électrique. La grandeur électrique peut être notamment un courant électrique de phase, de protection terre, différentiel, ou une tension électrique, ainsi que le dépassement de seuil de courant
ou de tension. La grandeur électrique peut être mesurée au moyen de transformateurs de mesure, de diviseur de tension, de capteur à effet Hall, ou de magnétorésistance.

Un dispositif 64 de mesure d'au moins une grandeur magnétique permet de fournir au circuit de codage un signal de contrôle représentatif de la dite au moins une grandeur magnétique. La grandeur magnétique peut être un champ ou une induction électromagnétiques.

Un dispositif 65 de mesure d'au moins une grandeur thermique permet de fournir au circuit de codage un signal de contrôle représentatif de ladite au moins une grandeur thermique. Cette grandeur peut être notamment une température interne à un boîtier de l'appareil électrique, une température de contact, ou température ambiante extérieure audit boîtier.

En recevant de tels signaux, un centralisateur distant peut montrer, par exemple sur un écran d'ordinateur, une partie ou toutes les caractéristiques d'un appareil.

Un dispositif 66 de communication permet d'envoyer ou de recevoir des signaux du circuit de codage. Le circuit de communication peut aussi permettre de communiquer notamment avec d'autres circuits de l'appareil électrique. Le numéro d'identification unique peut servir à l'adressage du dispositif de communication.

Un dispositif 67 de visualisation permet de recevoir du circuit de codage un signal représentatif d'une commande de visualisation. Ce dispositif peut être notamment un ou plusieurs voyants sous la forme de diodes électroluminescente, ou un dispositif 68 tel qu'un afficheur à cristaux liquides basse consommation.

Un dispositif 69 d'actionnement permet de recevoir du circuit de codage un signal représentatif d'une commande de l'appareil électrique. Un tel dispositif peut permettre de commander l'ouverture ou le test à distance d'un appareil électrique. Il peut être réalisé sous la forme d'un relais, d'un transistor ou par exemple d'un coupleur optique.

Un dispositif d'émission électromagnétique 85 disposé dans l'appareil permet d'envoyer des signaux du circuit de codage. De préférence, la fréquence d'émission du dispositif 85 est différente de la fréquence du rayonnement électromagnétique destiné à être reçu par les moyens de réception électromagnétiques 10.

Les dispositifs 60 à 69 et 85 peuvent être, de préférence, alimentés par l'alimentation VL fournie par le circuit d'entrée qui est télé-alimenté. Cependant, dans d'autres modes de réalisation de l'invention, certains dispositifs peuvent aussi être alimentés par d'autres alimentations de l'appareil électrique 10, l'isolement électrique étant assuré par les bobines 11 et 15 de réception et d'émission d'un rayonnement électromagnétique.

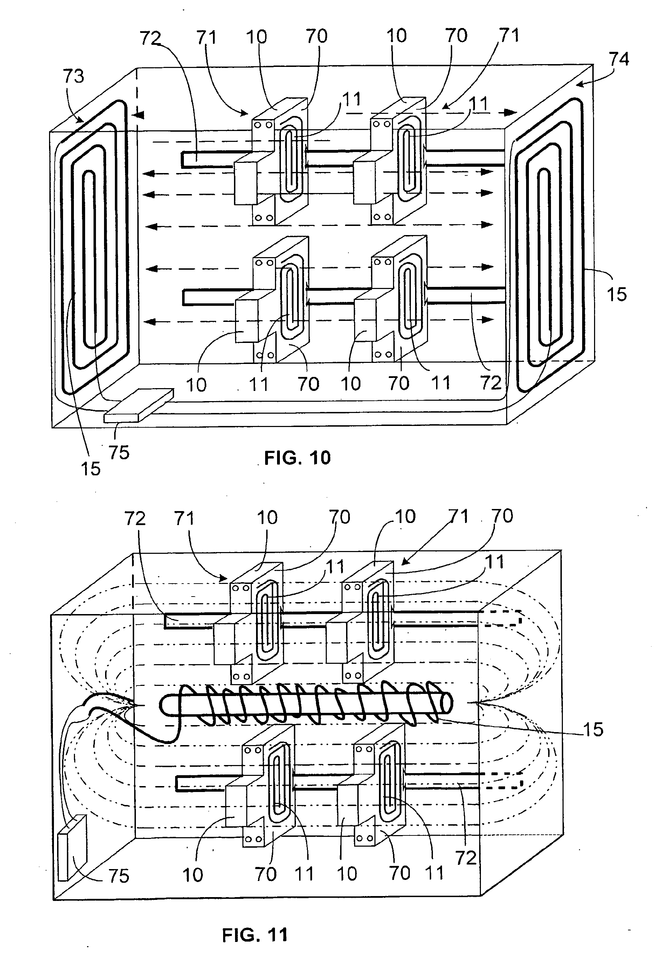

La figure 10 montre une vue d'un tableau électrique, d'une partie d'une installation, d'appareils 10, et d'un dispositif de surveillance selon des modes de réalisation de l'invention. Sur cette figure, les appareils 10 ont une bobine 11 de réception de rayonnement électromagnétique disposée sur une paroi latérale 70 dudit appareil. La bobine 11 est de préférence de forme plate. Les appareils électriques 10 sont, de préférence, disposés dans un boîtier 71 d'appareillage électrique modulaire pouvant être installé sur un support 72 en forme de rail.

Le dispositif de surveillance comporte avantageusement les moyens d'émission électromagnétique disposés dans au moins une paroi d'un coffret électrique. Ainsi, sur la figure 10, des bobines 15 d'émission de rayonnement électromagnétique d'un dispositif de surveillance sont disposées sur deux parois 73 et 74 de cotés opposés par rapport à la disposition d'au moins un appareil électrique 10. Les bobines d'émission 15 sont connectées à un boîtier 75 comportant notamment un oscillateur 14, un circuit de traitement 17, et/ou une alimentation 18. Le boîtier 75 peut aussi être un boîtier modulaire d'appareillage électrique pouvant être installé sur un support en forme rail 72. Les bobines 15 peuvent être connectées de façon indépendante sur le boîtier 75 ou reliées entre en série avant d'être connectées sur ledit boîtier 75. Dans ce mode de réalisation, le rayonnement électromagnétique 16 a des lignes de champ sensiblement linéaires et perpendiculaires à un plan des bobines 11 de formes plates.

La figure 11 montre une vue d'un tableau électrique, d'une partie d'une installation, d'appareils 10, et d'un dispositif de surveillance selon une variante des modes de réalisation de la figure 11. Dans ce cas la bobine 15 d'émission d'un rayonnement électromagnétique est de forme allongée disposée parallèlement à au moins un support en forme de rail 72 destiné à recevoir au moins un appareil électrique comportant une bobine 11 de réception électromagnétique. Sur cette figure, la bobine 15 est disposée entre deux rails 72.

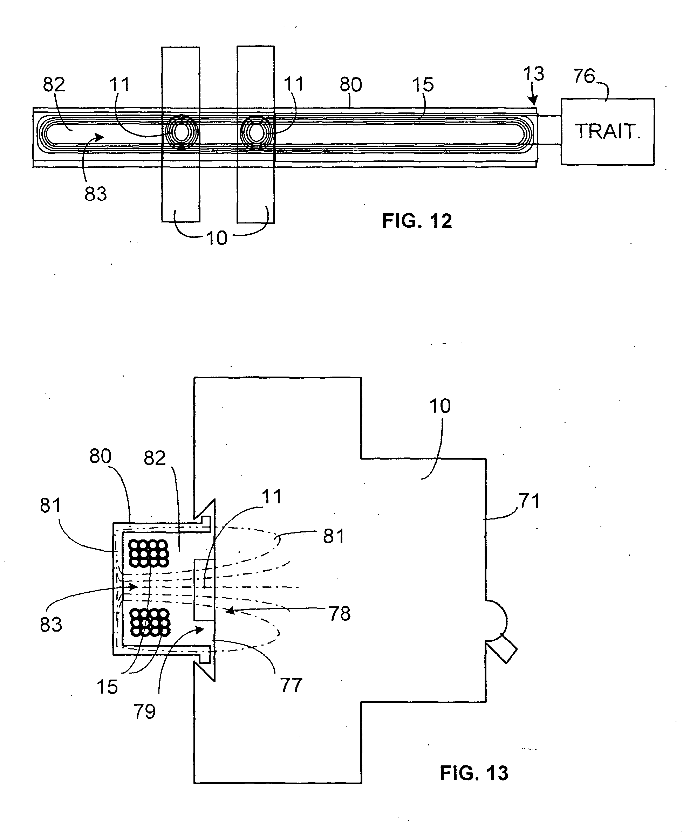

Les figures 12 et 13 montrent un autre mode de réalisation de l'invention. Dans ce mode réalisation, un appareil 10 comporte une bobine 11 de réception d'un rayonnement électromagnétique disposée sur un fond 77 dudit appareil. La bobine 11 peut être fixée sur le fond 77 du côté intérieur 78 ou du côté extérieur 79 de l'appareil comme représenté sur la figure 13. Dans ce cas, la bobine est susceptible d'être dirigée vers un support comportant des moyens d'émission 15 d'un rayonnement électromagnétique. L'appareil électrique 10 est alors de préférence disposé dans un boîtier 71 d'appareillage électrique modulaire pouvant être installés sur un support en forme de rail.

Dans les modes de réalisation des figures 12 et 13, un support 80 comporte des moyens d'émission électromagnétique destinés à émettre un rayonnement électromagnétique vers au moins un appareil électrique 10. Avantageusement, le support 80 comporte une boucle d'induction ou une bobine d'induction à plusieurs spires disposée sur une face avant dudit support. Le corps du support est de préférence en matériaux magnétique pour concentrer des lignes de champs.

De préférence, le support 80 a une forme de rail pour maintenir des appareils électriques. Avantageusement, le support est un rail symétrique ayant une partie creuse 82 en face avant comportant la bobine 15 à induction électromagnétique. Une partie centrale 83 de la bobine 15 à induction électromagnétique peut être avec ou sans noyau en matériau magnétique.

De préférence, un axe de champ magnétique est perpendiculaire à la longueur du support en forme de rail 80. Cependant, dans un autre mode réalisation, il est possible de disposer une bobine ayant un axe de champ magnétique parallèle à la longueur du support en forme de rail 80.

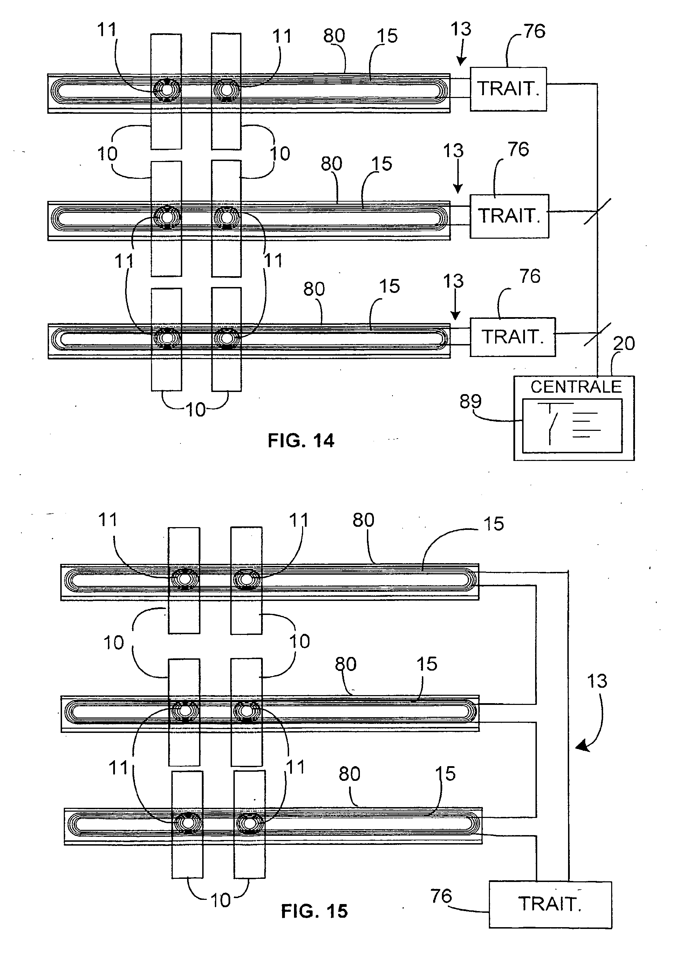

Les figures 14 et 15 montrent des dispositifs de surveillance et des parties d'installations comportant des appareils et des supports selon les modes de réalisation des figures 12 et 13. Sur la figure 14, l'installation électrique comporte trois dispositifs de surveillance 13 comportant un support 80 en forme rail contenant une bobine 15, et des appareils 10 avec une bobine 11 disposée sur le fond en face de la bobine 15. Chaque bobine 15 est connectée individuellement a un ensemble de traitement 76 comportant un oscillateur et un circuit de traitement. Les ensembles de traitement 76 de chaque dispositif de surveillance sont connectés à un centralisateur 20, appelé aussi centrale ou centre de contrôle. Le centralisateur 20 peut être situé à proximité des dispositifs de surveillance, par exemple dans un même tableau ou coffret électrique. Il peut être aussi situé à distance pour recevoir des signaux d'autres dispositifs de surveillance de l'installation électrique.

Sur la figure 15, l'installation électrique comporte un dispositif de surveillance 13 comportant trois supports en forme de rail contenant des bobines 15 et des appareils 10 avec une bobine 11 disposée sur le fond en face des bobines 15. Les bobines 15 des trois supports 80 sont connectées en série à un ensemble de traitement 76 comportant un oscillateur et un circuit de traitement.

Les installations électriques selon des modes de réalisation de l'invention concernent aussi bien des appareils connectés à un réseau de distribution électrique ou des dispositifs reliés par exemple à des centralisateurs que des coffrets, des tableaux ou des armoires électriques comprenant lesdits appareils, supports ou dispositifs de surveillance décrits ci-dessus.

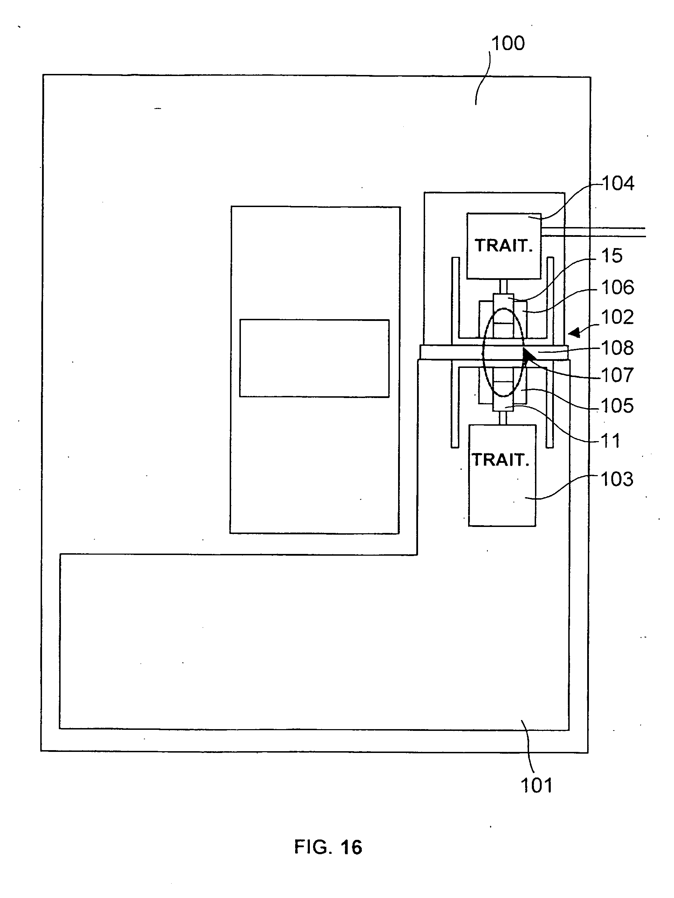

La figure 16 représente un appareil électrique constitué par un disjoncteur 100 comportant un déclencheur électronique 101 associé à des moyens de communication 102. Lesdits moyens de communication 102 comportent une bobine de réception électromagnétique 11 connectée à un circuit de traitement 103 du déclencheur, et une bobine d'émission 15 connecté à un circuit de traitement 104 de l'émission. Pour assurer un couplage magnétique très fort et permettre un transfert d'énergie électrique très élevée entre la bobine d'émission et la bobine de réception, le couplage magnétique est réalisé par un premier circuit magnétique 105 passant dans la bobine de réception 11 et par un second circuit magnétique 106 passant dans une bobine 15 d'émission électromagnétique. Le premier et le second circuits magnétiques permettent aussi le passage d'un flux magnétique 107 à travers une paroi 108 de l'appareil. La paroi 108 peut être une paroi interne ou une paroi externe du disjoncteur. Le circuit de traitement 103 peut comporter un circuit de codage et de décodage 46 représenter sur la figure 8 et recevoir et/ou émettre des valeurs de signaux, notamment des signaux fournis ou reçus par des dispositifs 60 à 69.

L'appareil est notamment un interrupteur. Un dispositif de surveillance est disposé dans un module d'appareillage électrique modulaire.

## Revendications

1. Système de surveillance comportant un dispositif de surveillance et au moins un appareil électrique à surveiller, ledit dispositif de surveillance étant pourvu de moyens (15, 75, 76) d'émission électromagnétique pour émettre un rayonnement (16) électromagnétique vers ledit appareil électrique (10), ledit appareil électrique comportant au moins un interrupteur électrique (2, 22) et un dispositif de contrôle dudit interrupteur électrique, ledit dispositif de contrôle comportant des moyens (11) de réception électromagnétique pour recevoir ledit rayonnement électromagnétique (16) connectés à au moins un capteur (12, 24, 34, 50, 60-65) fournissant au dit dispositif de contrôle un signal représentatif de l'état dudit interrupteur,
**caractérisé en ce que** lesdits moyens (11) de réception électromagnétique fournissent une énergie électrique lorsqu'ils reçoivent un rayonnement électromagnétique (16) depuis les moyens (15) d'émission électromagnétique, et **en ce que** ledit appareil électrique est conçu pour être installé sur un support (80) comportant lesdits moyens d'émission, lesdits moyens de réception électromagnétique (11) étant disposés sur un fond (77) dudit appareil électrique pour être dirigés vers ledit support lorsque ledit appareil est installé sur ledit support.

2. Système selon la revendication 1, **caractérisé en ce que** le dispositif de contrôle comporte des moyens de variation de charge (12, 24, 57, 58) connectés aux moyens (11) de réception électromagnétique pour renvoyer un signal de contrôle en modifiant le rayonnement électromagnétique (16) lorsqu'un rayonnement électromagnétique est reçu.

3. Système selon l'une quelconque des revendications 1 ou 2, **caractérisé en ce que** le dispositif de contrôle comporte au moins un dispositif de visualisation (21, 25, 28, 41, 43, 47, 67, 68) destiné à être alimenté par les moyens de réception électromagnétique (11) pour visualiser l'état d'au moins un capteur lorsqu'un rayonnement électromagnétique (16) est reçu par lesdits moyens de réception électromagnétique.

4. Système selon l'une quelconque des revendications 1 à 3, **caractérisé en ce que** les moyens de réception électromagnétique (11) comportent au moins une bobine d'induction électromagnétique.

5. Système selon l'une quelconque des revendications 1 à 4, **caractérisé en ce que** les moyens de réception électromagnétique (11) comportent au moins une antenne.

6. Système selon l'une quelconque des revendications 1 à 5, **caractérisé en ce que** les moyens de réception électromagnétique comportent un circuit (11, 26) accordé à une fréquence sensiblement égale à une fréquence du rayonnement électromagnétique (16).

7. Système selon l'une quelconque des revendications 1 à 6, **caractérisé en ce que** l'appareil électrique comporte un disjoncteur électrique (22) et un capteur (24) fournissant au dispositif de contrôle un signal représentatif de l'état dudit disjoncteur.

8. Système selon l'une quelconque des revendications 1 à 7, **caractérisé en ce que** l'appareil électrique comporte un dispositif (35 à 40) de détection de présence de tension électrique fournissant un signal représentatif d'une présence tension au dispositif de contrôle.

9. Système selon l'une quelconque des revendications 1 à 8, **caractérisé en ce que** le dispositif de contrôle comporte un circuit (45) d'entrée connecté aux moyens de réception électromagnétique (11) et un circuit (46) de codage connecté audit circuit d'entrée.

10. Système selon la revendication 9, **caractérisé en ce que** le circuit d'entrée (45) comporte des moyens pour fournir une alimentation électrique (VL) lorsqu'un rayonnement électromagnétique (16) est reçu.

11. Système selon l'une des revendications 9 ou 10, **caractérisé en ce que** le circuit d'entrée (45) comporte des moyens pour fournir un signal (CK) représentatif d'un signal d'horloge lorsqu'un rayonnement électromagnétique (16) est reçu.

12. Système selon l'une quelconque des revendications 9 à 11, **caractérisé en ce que** le circuit d'entrée (45) comporte des moyens (57, 58) pour faire varier une impédance de charge des moyens (11) de réception électromagnétique, la variation de l'impédance de charge permettant de modifier un rayonnement électromagnétique reçu par les dits moyens de réception et de renvoyer un signal vers des moyens d'émission dudit rayonnement électromagnétique.

13. Système selon l'une quelconque des revendications 9 à 12, **caractérisé en ce que** le circuit de codage (46) comporte au moins une entrée pour recevoir un signal (49) représentatif d'un signal de contrôle et au moins une sortie pour fournir un signal (48) représentatif d'une commande.

14. Système selon l'une quelconque des revendications 9 à 13, **caractérisé en ce que** le dispositif de contrôle comporte des moyens (60) d'identification pour fournir au circuit de codage un signal de contrôle représentatif de paramètres d'identification ou de réglage de l'appareil électrique.

15. Système selon la revendication 14, **caractérisé en ce que** les moyens d'identification comportent des moyens (88) de mémorisation pour mémoriser un numéro d'identification unique pour chaque appareil.

16. Système selon l'une quelconque des revendications 9 à 15, **caractérisé en ce que** le dispositif de contrôle comporte des moyens (61, 62) de détermination de l'état d'au moins un capteur de l'appareil électrique pour fournir au circuit de codage un signal de contrôle représentatif de l'état dudit au moins un capteur.

17. Système selon l'une quelconque des revendications 9 à 16, **caractérisé en ce que** le dispositif de contrôle comporte des moyens (63) de mesure d'au moins une grandeur électrique pour fournir au circuit de codage un signal de contrôle représentatif de la dite au moins une grandeur électrique.

18. Système selon l'une quelconque des revendications 9 à 17, **caractérisé en ce que** le dispositif de contrôle comporte des moyens (64) de mesure d'au moins une grandeur magnétique pour fournir au circuit de codage un signal de contrôle représentatif de la dite au moins une grandeur magnétique.

19. Système selon l'une quelconque des revendications 9 à 18, **caractérisé en ce que** le dispositif de contrôle comporte des moyens (65) de mesure d'au moins une grandeur thermique pour fournir au circuit de codage un signal de contrôle représentatif de la dite au moins une grandeur thermique.

20. Système selon l'une quelconque des revendications 9 à 19, **caractérisé en ce que** le dispositif de contrôle comporte des moyens (67, 68) de visualisation recevant du circuit de codage (46) un signal représentatif d'une commande de visualisation.

21. Système selon l'une quelconque des revendications 9 à 20, **caractérisé en ce que** le dispositif de contrôle comporte des moyens (69) d'actionnement recevant du circuit de codage (46) un signal représentatif d'une commande de l'appareil électrique.

22. Système selon l'une quelconque des revendications 9 à 21, **caractérisé en ce que** le dispositif de contrôle comporte des moyens (66) de communication pour envoyer ou recevoir des signaux du circuit de codage.

23. Système selon l'une quelconque des revendications 9 à 22, **caractérisé en ce que** le dispositif de contrôle comporte des moyens (85) d'émission électromagnétiques disposés dans l'appareil pour envoyer des signaux du circuit de codage.

24. Système selon l'une quelconque des revendications 9 à 23, **caractérisé en ce que** le circuit de codage (46) comporte des moyens de traitement anticollision pour gérer l'émission et/ou la réception de trames de communication.

25. Système selon l'une quelconque des revendications 9 à 24, **caractérisé en ce que** le circuit de codage (46) comporte des moyens pour transmettre un nombre prédéterminé de trames de communication identiques.

26. Système selon l'une quelconque des revendications 9 à 25, **caractérisé en ce que** le dispositif de contrôle comporte des moyens (86) d'initialisation connectés au circuit d'entrée et au circuit de codage.

27. Système selon l'une quelconque des revendications 1 à 26, **caractérisé en ce que** l'appareil électrique est disposé dans un boîtier (71) d'appareillage électrique modulaire.

28. Système selon l'une quelconque des revendications 1 à 27, **caractérisé en ce que** l'appareil électrique est constitué par un disjoncteur (100) comportant un déclencheur électronique (101) associé à des moyens de communication (102) comportant lesdits moyens de réception électromagnétique (11) et les moyens d'émission électromagnétique (15), lesdits moyens de réception et d'émission électromagnétique ayant un couplage magnétique.

29. Système selon la revendication 28, **caractérisé en ce que** le couplage magnétique est réalisé par un premier circuit magnétique (105) passant dans une bobine (11) de réception et par un second circuit magnétique (106) passant par une bobine (15) d'émission électromagnétique, le premier et le second circuits magnétiques permettant le passage d'un flux magnétique (107) à travers une paroi (108) de l'appareil.

30. Système selon l'une quelconque des revendications 1 à 29, **caractérisé en ce que** le dispositif de surveillance comporte des moyens (14) pour générer un signal haute fréquence connectés aux moyens (15) d'émission électromagnétique.

31. Système selon l'une des revendications 1 à 30, **caractérisé en ce que** le dispositif de surveillance comporte un circuit (17) de traitement comportant des moyens de modulation, de démodulation, de codage et/ou de décodage d'un signal représentatif d'un rayonnement (16) électromagnétique susceptible d'être émis par les moyens (15) d'émission électromagnétique.

32. Système selon la revendication 31, **caractérisé en ce que** le circuit de traitement (17) comporte des moyens de détection de la variation du rayonnement (16) électromagnétique émis par les moyens d'émission électromagnétique et susceptible d'être modifiés par un dispositif de contrôle d'au moins un appareil (10).

33. Système selon l'une des revendications 31 ou 32, **caractérisé en ce que** le dispositif de surveillance comporte des moyens (19) de visualisation connectés au circuit (17) de traitement.

34. Système selon l'une quelconque des revendications 31 à 33, **caractérisé en ce que** le dispositif de surveillance comporte des moyens pour communiquer avec un centralisateur (20) distant.

35. Système selon l'une quelconque des revendications 31 à 34, **caractérisé en ce que** le dispositif de surveillance comporte un centralisateur (20) connecté au circuit de traitement.

36. Système selon la revendication 35, **caractérisé en ce que** le centralisateur comporte des moyens (89) de contrôle d'installation électrique destinés à recevoir au moins un numéro d'identification d'au moins un appareil pour contrôler la visualisation de caractéristiques dudit au moins un appareil.

37. Système selon l'une quelconque des revendications 1 à 36, **caractérisé en ce que** le dispositif de surveillance comporte un coffret ayant au moins une paroi (73, 74) latérale comportant les moyens (15) d'émission électromagnétique.

38. Système selon l'une quelconque des revendications 1 à 37, **caractérisé en ce que** les moyens (15) d'émission électromagnétique comportent au moins deux bobines d'induction électromagnétique sur deux parois (73, 74) disposées sur des cotés opposés d'un coffret par rapport à la disposition d'au moins un appareil électrique (10) susceptible d'être disposé dans ledit coffret.

39. Système selon l'une quelconque des revendications 1 à 37, **caractérisé en ce que** les moyens (15) d'émission électromagnétique comportent au moins une bobine d'induction électromagnétique de forme allongée disposée parallèlement à au moins un support (72) en forme de rail destiné à recevoir un appareil électrique (10) comportant des moyens (11) de réception électromagnétique.

40. Système selon l'une quelconque des revendications 1 à 39, **caractérisé en ce que** les moyens (15) d'émission électromagnétique comportent au moins deux bobines d'induction électromagnétique reliées en série et connectées aux moyens (15, 75, 76) pour générer un signal haute fréquence.

41. Système selon l'une quelconque des revendications 1 à 39, **caractérisé en ce que** les moyens (15) d'émission électromagnétique comportent au moins deux bobines d'induction électromagnétique connectées individuellement à des moyens (15, 75, 76) pour générer un signal haute fréquence.

42. Système selon l'une quelconque des revendications 1 à 41, **caractérisé en ce que** le dispositif de surveillance comporte au moins un support d'appareillage électrique en forme de rail (80) comportant des moyens (15) d'émission électromagnétique destinés à émettre un rayonnement électromagnétique (16) vers au moins un appareil électrique (10) comportant des moyens (11) de réception électromagnétique.

43. Système selon la revendication 42, **caractérisé en ce que** les moyens (15) d'émission électromagnétique comportent au moins une boucle d'induction disposée sur une face avant dudit support.

44. Système selon l'une quelconque des revendications 42 ou 43, **caractérisé en ce que** les moyens (15) d'émission électromagnétique comportent au moins une bobine d'induction à plusieurs spires disposée sur une face avant du support.

45. Système selon l'une quelconque des revendications 42 à 44, **caractérisé en ce que** le support comporte un corps en matériaux magnétique pour concentrer des lignes (81) de champ magnétique.

46. Système selon l'une quelconque des revendications 42 ou 45, **caractérisé en ce que** le rail (80) est un rail symétrique ayant une partie creuse (82) en face avant comportant au moins une bobine (11) à induction électromagnétique.

47. Système selon la revendication 46, **caractérisé en ce que** la bobine (11) à induction électromagnétique a une partie centrale (83) sans matériau magnétique.

48. Système selon la revendication 47, **caractérisé en ce que** la bobine (11) à induction électromagnétique a une partie centrale (83) avec un noyau en matériau magnétique.

## Claims

1. A monitoring system comprising a monitoring device and at least one electrical apparatus to be monitored, said monitoring device being provided with electromagnetic emitting means (15, 75, 76) to emit an electromagnetic radiation (16) to said electrical apparatus (10), said electrical apparatus comprising at least one electric switch (2, 22) and a control device of said electric switch, said control device comprising electromagnetic receiving means (11) to receive said electromagnetic radiation (16) connected to at least one sensor (12, 24, 34, 50, 60-65) supplying a signal representative of the state of said switch to said control device,
**characterized in that** said electromagnetic receiving means (11) supply electrical power when they receive an electromagnetic radiation (16) from the electromagnetic emitting means (15), and that said electrical apparatus is designed to be installed on a support (80) comprising said transmission means, said electromagnetic receiving means (11) being arranged on a base-plate (77) of said electrical apparatus to be directed towards said support when said apparatus is installed on said support.

2. The system according to claim 1, **characterized in that** the monitoring device comprises load variation means (12, 24, 57, 58) connected to the electromagnetic receiving means (11) to send a monitoring signal by modifying the electromagnetic radiation (16) when an electromagnetic radiation is received.

3. The system according to either one of claims 1 or 2, **characterized in that** the monitoring device comprises at least one display device (21, 25, 28, 41, 43, 47, 67, 68) designed to be supplied by the electromagnetic receiving means (11) to display the state of at least one sensor when an electromagnetic radiation (16) is received by said electromagnetic receiving means.

4. The system according to any one of claims 1 to 3, **characterized in that** the electromagnetic receiving means (11) comprise at least one electromagnetic induction coil.

5. The system according to any one of claims 1 to 4, **characterized in that** the electromagnetic receiving means (11) comprise at least one antenna.

6. The system according to any one of claims 1 to 5, **characterized in that** the electromagnetic receiving means comprise a circuit (11, 26) tuned to a frequency substantially equal to a frequency of the electromagnetic radiation (16).

7. The system according to any one of claims 1 to 6, **characterized in that** the electrical apparatus comprises an electric circuit breaker (22) and a sensor (24) supplying a signal representative of the state of said circuit breaker to the control device.

8. The system according to any one of claims 1 to 7, **characterized in that** the electrical apparatus comprises a device (35 to 40) for detecting the presence of electrical voltage supplying a signal representative of a voltage presence to the control device.

9. The system according to any one of claims 1 to 8, **characterized in that** the control device comprises an input circuit (45) connected to the electromagnetic receiving means (11) and an encoding circuit (46) connected to said input circuit.

10. The system according to claim 9, **characterized in that** the input circuit (45) comprises means for supplying an electrical power supply (VL) when an electromagnetic radiation (16) is received.

11. The system according to one of claims 9 or 10, **characterized in that** the input circuit (45) comprises means for supplying a signal (CK) representative of a clock signal when an electromagnetic radiation (16) is received.

12. The system according to any one of claims 9 to 11, **characterized in that** the input circuit (45) comprises means (57, 58) for varying a load impedance of the electromagnetic receiving means (11), the load impedance variation enabling an electromagnetic radiation received by said receiving means to be modified and a signal to be sent back to means for emitting said electromagnetic radiation.

13. The system according to any one of claims 9 to 12, **characterized in that** the encoding circuit (46) comprises at least one input to receive a signal (49) representative of a control signal and at least one output to supply a signal (48) representative of a command.

14. The system according to any one of claims 9 to 13, **characterized in that** the control device comprises identification means (60) to supply a control signal representative of identification or setting parameters of the electrical apparatus to the encoding circuit.

15. The system according to claim 14, **characterized in that** the identification means comprise storage means (88) to store a unique identification number for each apparatus.

16. The system according to any one of claims 9 to 15, **characterized in that** the control device comprises means (61, 62) for determining the state of at least one sensor of the electrical apparatus to supply a control signal representative of the state of said at least one sensor to the encoding circuit.

17. The system according to any one of claims 9 to 16, **characterized in that** the control device comprises means (63) for measuring at least one electrical quantity to supply a control signal representative of said at least one electrical quantity to the encoding circuit.

18. The system according to any one of claims 9 to 17, **characterized in that** the control device comprises means (64) for measuring at least one magnetic quantity to supply a control signal representative of said at least one magnetic quantity to the encoding circuit.

19. The system according to any one of claims 9 to 18, **characterized in that** the control device comprises means (65) for measuring at least one thermal quantity to supply a control signal representative of said at least one thermal quantity to the encoding circuit.

20. The system according to any one of claims 9 to 19, **characterized in that** the control device comprises display means (67, 68) receiving a signal representative of a display command from the encoding circuit (46).

21. The system according to any one of claims 9 to 20, **characterized in that** the control device comprises actuating means (69) receiving a signal representative of a command of the electrical apparatus from the encoding circuit (46).

22. The system according to any one of claims 9 to 21, **characterized in that** the control device comprises communication means (66) to send signals to or receive signals from the encoding circuit.

23. The system according to any one of claims 9 to 22, **characterized in that** the control device comprises electromagnetic transmitting means (85) arranged in the apparatus to send signals from the encoding circuit.

24. The system according to any one of claims 9 to 23, **characterized in that** the encoding circuit (46) comprises anti-collision processing means to manage transmission and/or receipt of communication frames.

25. The system according to any one of claims 9 to 24, **characterized in that** the encoding circuit (46) comprises means for transmitting a preset number of identical communication frames.

26. The system according to any one of claims 9 to 25, **characterized in that** the control device comprises initialization means (86) connected to the input circuit and to the encoding circuit.

27. The system according to any one of claims 1 to 26, **characterized in that** the electrical apparatus is arranged in a modular electrical switchgear case (71).

28. The system according to any one of claims 1 to 27, **characterized in that** the electrical apparatus is formed by a circuit breaker (100) comprising an electronic trip unit (101) associated with communication means (102) comprising said electromagnetic receiving means (11) and the electromagnetic emitting means (15), said electromagnetic receiving and emitting means having a magnetic coupling.

29. The system according to claim 28, **characterized in that** magnetic coupling is performed by a first magnetic circuit (105) passing in a receiver coil (11) and by a second magnetic circuit (106) passing via an electromagnetic emitter coil (15), the first and second magnetic circuits enabling a magnetic flux (107) to flow through a wall (108) of the apparatus.

30. The system according to any one of claims 1 to 29, **characterized in that** the control device comprises means (14) for generating a high-frequency signal connected to the electromagnetic emitting means (15).

31. The system according to any one of claims 1 to 30, **characterized in that** the control device comprises a processing circuit (17) comprising means for modulating, demodulating, encoding and/or decoding a signal representative of an electromagnetic radiation (16) able to be emitted by the electromagnetic emitting means (15).

32. The system according to claim 31, **characterized in that** the processing circuit (17) comprises means for detecting the variation of the electromagnetic radiation emitted by the electromagnetic emitting means and able to be modified by a control device of at least one apparatus (10).

33. The system according to one of claims 31 or 32, **characterized in that** the monitoring device comprises display means (19) connected to the processing circuit (17).

34. The system according to any one of claims 31 to 33, **characterized in that** the monitoring device comprises means for communicating with a remote centralizer (20).

35. The system according to any one of claims 31 to 34, **characterized in that** the monitoring device comprises a centralizer (20) connected to the processing circuit.

36. The system according to claim 35, **characterized in that** the centralizer comprises electrical installation control means (89) designed to receive at least one identification number of at least one apparatus to control display of characteristics of said at least one apparatus.

37. The system according to any one of claims 1 to 36, **characterized in that** the monitoring device comprises an enclosure having at least one side wall (73, 74) comprising the electromagnetic emitting means (15).

38. The system according to any one of claims 1 to 37, **characterized in that** the electromagnetic emitting means (15) comprise at least two electromagnetic induction coils on two walls (73, 74) arranged on opposite sides of an enclosure with respect to the arrangement of at least one electrical apparatus (10) able to be housed in said enclosure.

39. The system according to any one of claims 1 to 37, **characterized in that** the electromagnetic emitting means (15) comprise at least one electromagnetic induction coil of elongate shape arranged in parallel manner to at least one support (72) in the form of a rail designed to receive an electrical apparatus (10) comprising the electromagnetic receiver means (11).

40. The system according to any one of claims 1 to 39, **characterized in that** the electromagnetic emitting means (15) comprise at least two electromagnetic induction coils connected in series and connected to the means (15, 75, 76) for generating a high-frequency signal.

41. The system according to any one of claims 1 to 39, **characterized in that** the electromagnetic emitting means (15) comprise at least two electromagnetic induction coils connected individually to means (15, 75, 76) for generating a high-frequency signal.

42. The system according to any one of claims 1 to 41, **characterized in that** the monitoring device comprises at least one electrical apparatus support in the form of a rail (80) comprising electromagnetic emitting means (15) designed to emit an electromagnetic radiation (16) to at least one electrical apparatus (10) comprising electromagnetic receiving means (11).

43. The system according to claim 42, **characterized in that** the electromagnetic emitting means (15) comprise at least one induction loop arranged on a front face of said support.

44. The system according to either one of claims 42 or 43, **characterized in that** the electromagnetic emitting means (15) comprise at least one induction coil with several turns arranged on a front face of the support.

45. The system according to any one of claims 42 to 44, **characterized in that** the support comprises a body made of magnetic material to concentrate magnetic field lines (81).

46. The system according to any one of claims 42 to 45, **characterized in that** the rail (80) is a symmetrical rail having a hollow part (82) on the front face comprising at least one electromagnetic induction coil (11).

47. The system according to claim 46, **characterized in that** the electromagnetic induction coil (11) has a central part (83) without magnetic material.

48. The system according to claim 47, **characterized in that** the electromagnetic induction coil (11) has a central part (83) with a core made of magnetic material.

## Patentansprüche

1. Überwachungssystem mit Überwachungseinrichtung und mindestens einem zu überwachenden elektrischen Gerät, welche Überwachungseinrichtung elektromagnetische Sendemittel (15, 75, 76) zur Aussendung einer elektromagnetischen Strahlung (16) an das genannte elektrische Gerät (10) umfasst, wobei das elektrische Gerät mindestens einen elektrischen Schalter (2, 22) sowie eine Steuereinrichtung eines elektrischen Schalters umfasst, und die genannte Steuereinrichtung elektromagnetische Empfangsmittel (11) zum Empfang der genannten elektromagnetischen Strahlung (16) umfasst, welche Empfangsmittel mit mindestens einem Messfühler (12, 24, 34, 50, 60 65) verbunden sind und ein Signal an die genannte Steuereinrichtung liefern, das den Schaltzustand des genannten Schalters abbildet,
**dadurch gekennzeichnet, dass** die genannten elektromagnetischen Empfangsmittel elektrische Energie liefern, wenn sie von den elektromagnetischen Sendemitteln (15) eine elektromagnetische Strahlung (16) empfangen, und dass das genannte elektrische Gerät dazu dient, auf einem, die genannten Sendemittel umfassenden Träger (80) montiert zu werden, wobei die genannten elektromagnetischen Empfangsmittel (11) auf einem Boden (77) des genannten elektrischen Geräts angeordnet sind, derart dass sie zu dem genannten Träger hin ausgerichtet werden können, wenn das genannte Gerät auf dem genannten Träger montiert wird.

2. System nach Anspruch 1, **dadurch gekennzeichnet, dass** die Steuereinrichtung Laständerungsmittel (12, 24, 57, 58) umfasst, die mit den elektromagnetischen Empfangsmitteln (11) verbunden sind, um bei Empfang einer elektromagnetischen Strahlung durch Änderung der elektromagnetischen Strahlung (16) ein Steuersignal rückzusenden.

3. System nach irgendeinem der Ansprüche 1 oder 2, **dadurch gekennzeichnet, dass** die Steuereinrichtung mindestens eine Anzeigeeinrichtung (21, 25, 28, 41, 43, 47, 67, 68) umfasst, die über die elektromagnetischen Empfangsmittel (11) mit Energie versorgt wird, um den Schaltzustand mindestens eines Messfühlers anzuzeigen, wenn die genannten elektromagnetischen Empfangsmittel eine elektromagnetische Strahlung (16) empfangen.

4. System nach irgendeinem der Ansprüche 1 bis 3, **dadurch gekennzeichnet, dass** die elektromagnetischen Empfangsmittel (11) mindestens eine elektromagnetische Induktionsspule umfassen.

5. System nach irgendeinem der Ansprüche 1 bis 4, **dadurch gekennzeichnet, dass** die elektromagnetischen Empfangsmittel (11) mindestens eine Antenne umfassen.

6. System nach irgendeinem der Ansprüche 1 bis 5, **dadurch gekennzeichnet, dass** die elektromagnetischen Empfangsmittel (11) eine Schaltung (11, 26) umfassen, die auf eine Frequenz abgestimmt ist, welche annähernd mit einer Frequenz der elektromagnetischen Strahlung (16) übereinstimmt.

7. System nach irgendeinem der Ansprüche 1 bis 6, **dadurch gekennzeichnet, dass** das elektrische Gerät einen Leistungsschalter (22) und einen Messfühler (24) umfasst, der die Steuereinrichtung mit einem Signal beaufschlagt, welches den Schaltzustand des genannten Leistungsschalters abbildet.

8. System nach irgendeinem der Ansprüche 1 bis 7, **dadurch gekennzeichnet, dass** das elektrische Gerät eine Spannungsnachweiseinrichtung (35 bis 40) umfasst, welche die Steuereinrichtung mit einem das Anstehen einer elektrischen Spannung abbildenden Signal beaufschlagt.

9. System nach irgendeinem der Ansprüche 1 bis 8, **dadurch gekennzeichnet, dass** die Steuereinrichtung eine mit den elektromagnetischen Empfangsmitteln (11) verbundene Eingangsschaltung (45) sowie eine mit der genannten Eingangsschaltung verbundene Kodierschaltung (46) umfasst.

10. System nach Anspruch 9, **dadurch gekennzeichnet, dass** die Eingangsschaltung (45) Mittel zur Lieferung einer elektrischen Versorgungsspannung (VL) bei Empfang einer elektromagnetischen Strahlung (16) umfasst.

11. System nach Anspruch 9 oder 10, **dadurch gekennzeichnet, dass** die Eingangsschaltung (45) Mittel zur Lieferung eines ein Uhrzeitsignal abbildenden Signals (CK) bei Empfang einer elektromagnetischen Strahlung (16) umfasst.

12. System nach irgendeinem der Ansprüche 9 bis 11, **dadurch gekennzeichnet, dass** die Eingangsschaltung (45) Mittel (57, 58) zur Änderung eines Lastwiderstands der elektromagnetischen Empfangsmittel (11) umfasst, wobei durch die Lastwiderstandsänderung eine von den genannten Empfangsmitteln empfangene elektromagnetische Strahlung verändert sowie die Rücksendung eines Signals an die Sendemittel der genannten elektromagnetischen Strahlung bewirkt werden kann.

13. System nach irgendeinem der Ansprüche 9 bis 12, **dadurch gekennzeichnet, dass** die genannte Kodierschaltung (46) mindestens einen Eingang zum Empfang eines, ein Steuersignal abbildenden Signals (49) sowie mindestens einen Ausgang zur Lieferung eines, einen Befehl abbildenden Signals (48) umfasst.

14. System nach irgendeinem der Ansprüche 9 bis 13, **dadurch gekennzeichnet, dass** die Steuereinrichtung Erkennungsmittel (60) zur Beaufschlagung der Kodierschaltung mit einem Identifikations- oder Einstellparameter des elektrischen Gerätes abbildenden Steuersignal umfasst.

15. System nach Anspruch 14, **dadurch gekennzeichnet, dass** die Erkennungsmittel Speichermittel (88) zur Speicherung einer für jedes Gerät spezifischen Identifikationsnummer umfasst.

16. System nach irgendeinem der Ansprüche 9 bis 15, **dadurch gekennzeichnet, dass** die Steuereinrichtung Mittel (61, 62) zur Bestimmung des Schaltzustands mindestens eines Messfühlers des elektrischen Geräts umfasst, um die Kodierschaltung mit einem Steuersignal zu beaufschlagen, das den Schaltzustand des genannten, mindestens einfach vorhandenen Messfühlers abbildet.

17. System nach irgendeinem der Ansprüche 9 bis 16, **dadurch gekennzeichnet, dass** die Steuereinrichtung Messmittel (63) zur Messung mindestens einer elektrischen Größe umfasst, um die Kodierschaltung mit einem Steuersignal zu beaufschlagen, das die genannte, mindestens eine elektrische Größe abbildet.

18. System nach irgendeinem der Ansprüche 9 bis 17, **dadurch gekennzeichnet, dass** die Steuereinrichtung Messmittel (64) zur Messung mindestens einer magnetischen Größe umfasst, um die Kodierschaltung mit einem Steuersignal zu beaufschlagen, das die genannte, mindestens eine magnetische Größe abbildet.

19. System nach irgendeinem der Ansprüche 9 bis 18, **dadurch gekennzeichnet, dass** die Steuereinrichtung Messmittel (65) zur Messung mindestens einer thermischen Größe umfasst, um die Kodierschaltung mit einem Steuersignal zu beaufschlagen, das die genannte, mindestens eine thermischen Größe abbildet.

20. System nach irgendeinem der Ansprüche 9 bis 19, **dadurch gekennzeichnet, dass** die Steuereinrichtung Anzeigemittel (67, 68) umfasst, die von der Kodierschaltung (46) ein Signal empfangen, das einen Anzeigebefehl abbildet.

21. System nach irgendeinem der Ansprüche 9 bis 20, **dadurch gekennzeichnet, dass** die Steuereinrichtung Betätigungsmittel (69) umfasst, die von der Kodierschaltung (46) ein Signal empfangen, das einen Betätigungsbefehl des elektrischen Gerätes abbildet.

22. System nach irgendeinem der Ansprüche 9 bis 21, **dadurch gekennzeichnet, dass** die Steuereinrichtung Kommunikationsmittel (66) umfasst, um Signale der Kodierschaltung auszusenden oder zu empfangen.

23. System nach irgendeinem der Ansprüche 9 bis 22, **dadurch gekennzeichnet, dass** die Steuereinrichtung im Gerät angeordnete elektromagnetische Sendemittel (85) umfasst, um Signale der Kodierschaltung auszusenden.

24. System nach irgendeinem der Ansprüche 9 bis 23, **dadurch gekennzeichnet, dass** die Kodierschaltung (46) Kollisionsschutz-Verarbeitungsmittel umfasst, um die Aussendung und/oder den Empfang von Kommunikations-Signalblöcken zu steuern.

25. System nach irgendeinem der Ansprüche 9 bis 24, **dadurch gekennzeichnet, dass** die Kodierschaltung (46) Mittel zur Übertragung einer bestimmten Anzahl von identischen Kommunikations-Signalblöcken umfasst.

26. System nach irgendeinem der Ansprüche 9 bis 25, **dadurch gekennzeichnet, dass** die Steuereinrichtung mit der Eingangsschaltung und der Kodierschaltung verbundene Initialisierungsmittel (86) umfasst.

27. System nach irgendeinem der Ansprüche 1 bis 26, **dadurch gekennzeichnet, dass** das elektrische Gerät in einem Gehäuse (71) für modulare elektrische Geräte angeordnet ist.

28. System nach irgendeinem der Ansprüche 1 bis 27, **dadurch gekennzeichnet, dass** das elektrische Gerät aus einem Leistungsschalter (100) mit einem, Kommunikationsmitteln (102) zugeordneten elektronischen Auslöser (101) besteht, welche Mittel die genannten elektromagnetischen Empfangsmittel (11) und elektromagnetischen Sendemittel (15) umfassen, wobei die elektromagnetischen Empfangs- und Sendemittel magnetisch gekoppelt sind.

29. System nach Anspruch 28, **dadurch gekennzeichnet, dass** die magnetische Kopplung durch einen ersten, eine Empfangsspule (11) durchsetzenden Magnetkreis (105) sowie durch einen zweiten, eine elektromagnetische Sendespule (15) durchsetzenden Magnetkreis (106) gebildet wird, wobei der erste und der zweite Magnetkreis den Durchgang eines magnetischen Flusses (107) durch eine Wand (108) des Gerätes ermöglichen.

30. System nach irgendeinem der Ansprüche 1 bis 29, **dadurch gekennzeichnet, dass** die Überwachungseinrichtung mit den elektromagnetischen Sendemitteln (15) verbundene Mittel (14) zur Erzeugung eines Hochfrequenzsignals umfasst.

31. System nach einem der Ansprüche 1 bis 30, **dadurch gekennzeichnet, dass** die Überwachungseinrichtung eine Verarbeitungsschaltung (17) mit Mitteln zur Modulation, Demodulation, Kodierung und/oder Dekodierung eine Signals umfasst, das eine von den elektromagnetischen Sendemitteln (15) ausgesandte elektromagnetische Strahlung (16) abbildet.

32. System nach Anspruch 31, **dadurch gekennzeichnet, dass** die genannte Verarbeitungsschaltung (17) Mittel zur Erkennung der von den elektromagnetischen Sendemitteln (15) ausgesandten und durch eine Steuereinrichtung mindestens eines elektrischen Geräts (10) veränderbaren elektromagnetischen Strahlung (16) umfasst.

33. System nach einem der Ansprüche 31 oder 32, **dadurch gekennzeichnet, dass** die Überwachungseinrichtung mit der Verarbeitungsschaltung (17) verbundene Anzeigemittel (19) umfasst.

34. System nach irgendeinem der Ansprüche 31 bis 33, **dadurch gekennzeichnet, dass** die Überwachungseinrichtung Mittel zur Kommunikation mit einer entfernt installierten Steuerzentrale (20) umfasst.

35. System nach irgendeinem der Ansprüche 31 bis 34, **dadurch gekennzeichnet, dass** die Überwachungseinrichtung eine mit der Verarbeitungsschaltung (17) verbundene Steuerzentrale (20) umfasst.

36. System nach Anspruch 35, **dadurch gekennzeichnet, dass** die Steuerzentrale Mittel (89) zur Steuerung einer elektrischen Installation umfasst, die dazu dienen, mit mindestens einer Identifikationsnummer mindestens eines Gerätes beaufschlagt zu werden, um die Anzeige von Kenndaten des genannten mindestens einfach vorhandenen Geräts zu steuern.

37. System nach irgendeinem der Ansprüche 1 bis 36, **dadurch gekennzeichnet, dass** die Überwachungseinrichtung ein Gehäuse mit mindestens einer Seitenwand (73, 74) umfasst, in welche die elektromagnetischen Sendemittel (15) integriert sind.

38. System nach irgendeinem der Ansprüche 1 bis 37, **dadurch gekennzeichnet, dass** die elektromagnetischen Sendemittel (15) mindestens zwei elektromagnetische Induktionsspulen an zwei Wänden (73, 74) eines Gehäuses umfassen, welche Wände in Bezug zur Lage eines zur Installation im genannten Gehäuse vorgesehenen elektrischen Geräts (10) an einander gegenüberliegenden Gehäuseseiten angeordnet sind.

39. System nach irgendeinem der Ansprüche 1 bis 37, **dadurch gekennzeichnet, dass** die elektromagnetischen Sendemittel (15) mindestens eine länglich ausgebildete, parallel zu mindestens einem schienenförmigen Träger (72) angeordnete elektromagnetische Induktionsspule umfassen, welcher Träger zur Aufnahme eines elektrischen Geräts (10) mit elektromagnetischen Empfangsmittel (11) dient.

40. System nach irgendeinem der Ansprüche 1 bis 39, **dadurch gekennzeichnet, dass** die elektromagnetischen Sendemittel (15) mindestens zwei in Reihe miteinander geschaltete und mit den Mitteln zur Erzeugung eines Hochfrequenzsignals (15, 75, 76) verbundene elektromagnetische Induktionsspulen umfassen.

41. System nach irgendeinem der Ansprüche 1 bis 39, **dadurch gekennzeichnet, dass** die elektromagnetischen Sendemittel (15) mindestens zwei, einzeln mit den Mitteln zur Erzeugung eines Hochfrequenzsignals (15, 75, 76) verbundene elektromagnetische Induktionsspulen umfassen.

42. System nach irgendeinem der Ansprüche 1 bis 41, **dadurch gekennzeichnet, dass** die Überwachungseinrichtung mindestens einen schienenförmigen Geräteträger (80) umfasst, in den die elektromagnetischen Sendemittel (15) zur Aussendung einer elektromagnetischen Strahlung (16) in Richtung mindestens eines elektrischen Geräts (10) mit elektromagnetischen Empfangsmitteln (11) integriert sind.

43. System nach Anspruch 42, **dadurch gekennzeichnet, dass** die elektromagnetischen Sendemittel (15) mindestens eine, an einer Vorderseite des genannten Trägers angeordnete Induktionsschleife umfassen.

44. System nach irgendeinem der Ansprüche 42 oder 43, **dadurch gekennzeichnet, dass** die elektromagnetischen Sendemittel (15) mindestens eine, an einer Vorderseite des genannten Trägers angeordnete Induktionsspule mit mehreren Windungen umfassen.

45. System nach irgendeinem der Ansprüche 42 bis 44, **dadurch gekennzeichnet, dass** der Träger einen Grundkörper aus einem Magnetwerkstoff zur Konzentration der magnetischen Feldlinien umfasst.

46. System nach irgendeinem der Ansprüche 42 oder 45, **dadurch gekennzeichnet, dass** der Träger (80) als symmetrische Schiene mit einem Hohlbereich an der Vorderseite ausgebildet ist, der mindestens eine elektromagnetische Induktionsspule (11) enthält.

47. System nach Anspruch 46, **dadurch gekennzeichnet, dass** die elektromagnetische Induktionsspule (11) einen Innenbereich (83) aufweist, der nicht von einem Magnetwerkstoff ausgefüllt ist.

48. System nach Anspruch 47, **dadurch gekennzeichnet, dass** die elektromagnetische Induktionsspule (11) einen Innenbereich (83) mit einem Kern aus einem Magnetwerkstoff aufweist.
